# EUROPÄISCHE PATENTSCHRIFT

(11) **EP 2 838 047 B1**
(45) Veröffentlichungstag und Bekanntmachung des Hinweises auf die Patenterteilung: **11.04.2018**
(21) Anmeldenummer: 14192064.5
(22) Anmeldetag: 21.01.2013
(51) Int. Cl.: G06K 7/10, B65G 1/137, G06Q 50/00, G06K 17/00, G01S 13/75, G01S 7/41

(54) **Verfahren und Vorrichtung zum Identifizieren eines Zugriffs auf Fächer eines Lagersystems**
Method and device for identifying access to compartments of a storage system
Procédé et dispositif d'identification d'un accès à des compartiments d'un système de stockage

(30) Priorität: 30.01.2012 DE 102012100731
(43) Veröffentlichungstag der Anmeldung: 18.02.2015
(62) Teilanmeldung aus: 13702333.9
(73) Patentinhaber: Technische Universität München, 80333 München (DE)
(72) Erfinder: Fischer, Roland, 91233 Kersbach (DE); Günthner, Willibald, 85591 Vaterstetten (DE); Salfer, Michael, 8112 Eisbach (AT); Wölfle, Michael, 82299 Türkenfeld (DE); Mirlach, Michael, 81249 München (DE)
(74) Vertreter: Lucke, Andreas

(56) Entgegenhaltungen:
- DE-A1-102004 041 491
- US-A1- 2006 284 727
- US-A1- 2010 271 187

## Beschreibung

### Gebiet der Erfindung

Die Erfindung bezieht sich auf ein Verfahren und eine Vorrichtung zum Identifizieren eines Zugriffs auf Fächer eines Lagersystems bei der manuellen Kommissionierung unter Verwendung eines RFID-Systems.

### Hintergrund und Stand der Technik

Lagerarbeit ist trotz eines hohen Mechanisierungs- und Automatisierungsgrades noch immer mit einem hohen Anteil manueller Tätigkeit verbunden. Dies gilt insbesondere für die Prozesse der Kommissionierung/Auftragszusammenstellung im Rahmen der Intralogistik sowie der Distributionslogistik, welche für bis zu 50% der Lagerkosten verantwortlich sind. Darüber hinaus hat die Kommissionierung eine direkte Auswirkung auf den Servicegrad der Logistik.

Bei der Kommissionierung hat ein Kommissionierer die Aufgabe, entsprechend einem Kommissionierauftrag vorgegebene Artikel aus einem Lager mit einer Vielzahl von Fächern oder Behältern zu entnehmen oder in solche Fächer einzuordnen. Dabei kommt es in der Praxis immer wieder vor, dass aus einem Fach die falschen Artikel entnommen werden oder in das Fach die falschen Artikel einsortiert werden. Die Entnahme falscher Artikel aus dem Lager bzw. eine falsche Bestückung des Lagers führt zu großen Zeitverlusten und, sofern sie nicht bemerkt wird, zu Qualitätseinbußen bei der Lieferung. Die Nichtverfügbarkeit der richtigen Artikel kann im produzierenden Gewerbe schnell zu Produktionsverzögerungen oder Produktionsausfällen führen, welche mit erheblichen Kosten verbunden sind.

Zur Vermeidung von Zugriffsfehlern werden oft Vorgabesysteme eingesetzt, welche dem Kommissionierer anzeigen, aus welchem Lagerort er entnehmen soll oder welches Lagerfach er beschicken soll. Dazu gehören beispielsweise Pick-by-Voice-Systeme oder Pick-to-Light-Systeme. Darüber hinaus wurden Kontrollmechanismen entwickelt, um zu überprüfen, ob der Kommissionierer den Vorgaben folgt. Solche Systeme lassen sich grob in vier Klassen einteilen: (1) manuelle Bestätigung der richtigen Entnahme-/Abgabeorte; (2) technisch unterstützte Bestätigung der richtigen Entnahme-/Abgabeorte; (3) direktes Überprüfen der entnommenen/einsortierten Artikel; und (4) automatische Erfassung der Entnahme-/Abgabeorte.

Bei der manuellen Bestätigung obliegt die Kontrolle allein dem Kommissionierer selbst, welcher beim Entnehmen/Einsortieren seine Kommissionierliste abgleicht und abzeichnet. Es erfolgt keine gesonderte Überprüfung der richtigen Ausführung.

Bei der technisch unterstützten Bestätigung gemäß der zweiten Klasse erfolgt eine Kontrolle des richtigen Zugriffs durch Eingabe von Prüfziffern mittels einer Tastatur, Vorlesen von Prüfziffern in ein Mikrofon, Scannen von Barcodes oder Betätigen von Quittiereinrichtungen an Lagerfächern. Gemein ist allen Systemen dieser Klasse ein dem Greifvorgang nachgelagerter Prozessschritt zur Bestätigung bzw. Kontrolle. Ein solcher Prozessschritt kostet Zeit und verursacht dadurch zusätzliche Prozesskosten. Zudem kann der Kontrollschritt selbst wiederum fehlerbehaftet sein. Beispielsweise kann der Kommissionierer irrtümlich in das falsche Fach des Lagers greifen, jedoch im nachgelagerten Kontrollschritt das richtige Fach bestätigen.

Die Verlässlichkeit der Kontrolle lässt sich mit den Systemen der dritten Klasse steigern, bei denen die entnommenen bzw. einsortierten Artikel direkt überprüft werden, beispielsweise durch einen Barcodescan am Artikel. Dadurch lassen sich Fehler wirksam vermeiden. Diese Verfahren sind jedoch sehr zeitaufwändig, dadurch kostenintensiv und daher nur in wenigen Fällen wirtschaftlich zu betreiben.

Als vorteilhaft haben sich in der Praxis die Systeme der vierten Klasse erwiesen, welche parallel zum Entnahme-/Abgabevorgang der Kommissionierung automatisch dessen Korrektheit überprüfen, ohne jedoch jeden einzelnen Artikel zu überprüfen. Die Überprüfung bleibt vorzugsweise vom Kommissionierer völlig unbemerkt. Eine Rückmeldung erfolgt nur, wenn der Kommissionierer einen Fehler macht. Dadurch lässt sich die Prozesszeit im Vergleich zur zweiten und dritten Klasse entscheidend reduzieren. Vorbekannte Lösungen umfassen beispielsweise Lager, welche mit Berührungssensoren im Lagerfach oder mit einem Laservorhang ausgestattet sind, um einen Griff des Kommissionierers in das Lagerfach zu erkennen. Nachteilig an diesen Lösungen sind allerdings die hohen Investitionskosten und der Montageaufwand, da die Sensoren in jedem Lagerfach bzw. an jedem Regalabschnitt angebracht werden müssen. Zudem können solche Systeme nicht feststellen, welcher Kommissionierer den Sensor ausgelöst hat, so dass sich mehrere Kommissionierer nur mit zusätzlichem Aufwand unterscheiden lassen.

Ein System zur automatischen Erfassung des Entnahme- und Abgabeortes, welches diese Nachteile vermeidet, ist in der Offenlegungsschrift DE 10 2004 041 491 A1 beschrieben. Bei diesem System ist jedes der Lagerfächer mit einem RFID-Transponder ausgerüstet. Der Kommissionierer trägt an seinem Handgelenk ein RFID-Lesegerät, welches bei einem Griff des Kommissionierers in ein Lagerfach den zugeordneten RFID-Transponder und somit das Lagerfach identifiziert. Das RFID-Lesegerät kommuniziert über einen zweiten Übertragungsstandard mit einer Datenbank, welche den Zugriff auf die Fächer des Lagersystems mit der Kommissionierliste abgleicht. Ein entsprechend der Kommissionierliste erfolgter Zugriff auf ein Fach des Lagersystems kann durch ein akustisches, optisches oder haptisches Signal bestätigt werden. Bei Fehlzugriffen kann der Kommissionierer durch ein davon verschiedenes akustisches, optisches oder haptisches Signal informiert werden.

RFID-Transponder können in großer Zahl kostengünstig hergestellt und an den Regalfächern montiert werden. Auch bestehende Lagersysteme lassen sich mit diesem System einfach nachrüsten. Zudem lassen sich mehrere Kommissionierer unterscheiden, da jeder von ihnen ein eigenes RFID-Lesegerät trägt.

Das in DE'491 vorgestellte System birgt jedoch die Gefahr fehlerhafter Lesungen. Beispielsweise können statt des dem Fach, in welches der Kommissionierer greift, zugeordneten Transponders fälschlicherweise die Transponder der seitlich oder ober- oder unterhalb benachbarten Lagerfächer identifiziert werden. Zur Vermeidung dieser Probleme schlägt die DE'491 vor, die Fachtrennwände des Lagers aus elektrisch abschirmendem Material auszubilden. Dies ist jedoch mit zusätzlichen Kosten verbunden und erschwert die Nachrüstung bestehender Lager. Die DE'491 schlägt auch vor, in Abhängigkeit von den örtlichen Gegebenheiten, insbesondere der Größe der Lagerfächer, die Lesereichweite des RFID-Lesegeräts zu reduzieren. Dies kann Fehlauslesungen, die durch benachbarte Lagerfächer hervorgerufen werden, reduzieren. Dem Kommissionierer werden jedoch möglicherweise Zwangsbewegungen bzw. unnatürliche Bewegungen aufgenötigt, um trotz reduzierter Lesereichweite beim Griff in das Regalfach den Transponder auszulösen. Dadurch entstehen Zeitverluste, welche die Kommissionierkosten erhöhen. Zudem sinkt die Akzeptanz des Systems bei den Kommissionierern.

Aus der US 2010/0271187 A1 ist ein Verfahren bekannt, bei welchem zu transportierende Kästen mit RFID-Transpondereinheiten versehen sind. Ein Arbeiter trägt an seinem Handgelenk eine Manschette mit einer RFID-Leseeinheit, welche die transportierten Kästen über die entsprechende RFID-Transpondereinheit identifiziert und durch eine Bewegung des Arbeiters aktiviert werden kann.

Aus der Veröffentlichungsschrift US 2006/0284727 A1 ist ein Verfahren zur Bestimmung der Entfernung eines RFID-Transponders von einer RFID-Lesereinheit aus der Phasenlage bekannt.

Es besteht daher ein Bedarf nach einem verbesserten System zur automatischen Erfassung der Entnahme- bzw. Abgabeorte, welches die vorangehend beschriebenen Nachteile vermeidet und eine zuverlässige Identifizierung des Zugriffs auf Fächer eines Lagersystems ermöglicht.

### Übersicht über die Erfindung

Diese Aufgabe wird durch ein Verfahren bzw. eine Vorrichtung zum Identifizieren eines Zugriffs auf Fächer eines Lagersystems mit den Merkmalen des Anspruchs 1 bzw. des Anspruchs 6 gelöst. Die abhängigen Ansprüche beziehen sich auf bevorzugte Ausführungsformen.

Die Erfindung bezieht sich auf ein Verfahren zum Identifizieren eines Zugriffs auf Fächer eines Lagersystems, denen jeweils RFID-Transpondereinheiten zugeordnet sind, mit den Schritten des Identifizierens eines Bewegungsmusters einer Person, um den Zugriff auf ein Fach des Lagersystems zu erfassen, des Aussendens eines elektromagnetischen Signals mittels einer RFID-Leseeinheit und des Erfassens eines elektromagnetischen Antwortsignals, welche von zumindest einer der RFID-Transpondereinheiten in Reaktion auf das ausgesandte Signal erzeugt wird, mittels der RFID-Leseeinheit, um daraus bei dem Zugriff auf das Fach die dem Fach zugeordnete RFID-Transpondereinheit zu identifizieren, wobei das Identifizieren der RFID-Transpondereinheit in Abhängigkeit von dem Identifizieren des Bewegungsmusters der Person erfolgt. Das Bewegungsmuster umfasst eine Greifbewegung der Person.

Die Bewegungsdetektoreinheit bzw. die RFID-Leseeinheit ist vorzugsweise an einer Hand oder einem Arm, insbesondere einem Unterarm, der Person befestigt.

Charakteristisch ist insbesondere die Umkehrbewegung zwischen dem Griff in das Fach bzw. dem Greifen des Artikels und dem Zurückziehen der Hand aus dem Fach.

In einer bevorzugten Ausführungsform umfasst das Identifizieren des Bewegungsmusters das Analysieren eines zeitlichen Verlaufs einer Phasenlage der Antwortsignale, insbesondere das Analysieren einer zeitlichen Variation der Phasenlage.

Das Aussenden des elektromagnetischen Signals und/oder das Erfassen des elektromagnetischen Antwortsignals kann in diesem Fall in Abhängigkeit von dem identifizierten Bewegungsmuster erfolgen.

Vorzugsweise kann das Aussenden des elektromagnetischen Signals und/oder das Erfassen des elektromagnetischen Antwortsignals ausschließlich in Reaktion auf das Identifizieren des Bewegungsmusters der Person erfolgen, d.h., nur dann erfolgen, wenn ein Bewegungsmuster der Person, welches einem Zugriff auf ein Fach des Lagersystems entspricht, identifiziert wurde.

Die Erfindung ermöglicht auf diese Weise einen energiesparenden Betrieb der RFID-Leseeinheit, weil die Leseeinheit nur dann zum Aussenden eines elektromagnetischen Signals und/oder zum Erfassen eines elektromagnetischen Antwortsignals aktiviert werden muss, wenn tatsächlich auf ein Fach des Lagersystems zugegriffen wird.

Das Identifizieren des Bewegungsmusters kann vorzugsweise mittels einer Bewegungsdetektoreinheit erfolgen, welche mit der RFID-Leseeinheit gekoppelt ist und insbesondere an einer Hand, einem Arm, einem Unterarm, einem Bein, einem Kleidungsstück oder einem Gürtel der Person getragen werden kann.

Die Bewegungsdetektoreinheit kann insbesondere in die RFID-Leseeinheit integriert sein.

In einer bevorzugten Ausführungsform umfasst das Identifizieren des Bewegungsmusters bzw. der Greifbewegung das Erfassen von Muskelimpulsen und/oder Sehnenimpulsen. Insbesondere können Muskelimpulse und/oder Sehnenimpulse erfasst werden, welche mit der Bewegung der Finger der Hand assoziiert sind.

Das Identifizieren des Bewegungsmusters bzw. der Greifbewegung kann alternativ oder zusätzlich auch das Erfassen einer Linearbeschleunigung und/oder einer Rotationsbeschleunigung umfassen.

In einer bevorzugten Ausführungsform umfasst das Identifizieren der Greifbewegung das Erfassen einer Fingerkrümmung. Das Erfassen der Fingerkrümmung kann eine Streulichtdetektion und/oder eine Magnetfelddetektion, beispielsweise eine Detektion der Veränderung eines Magnetfeldes durch Verformung eines mit dem Finger der Person verbundenen magnetischen Elements, und/oder eine Beschleunigungsdetektion umfassen.

Die Bewegungsdetektoreinheit bzw. die RFID-Leseeinheit, welche mit der Bewegungsdetektoreinheit gekoppelt ist oder in welche die Bewegungsdetektoreinheit integriert ist, ist in diesem Fall vorzugsweise an der Hand der Person befestigt.

Beispielsweise umfasst das Verfahren zusätzlich den Schritt des Bestimmens einer räumlichen Orientierung der RFID-Leseeinheit durch Analysieren der Greifbewegung. Beispielsweise lässt sich durch Analysieren der Greifbewegung, wie sie mit Bezug auf die vorangehenden Ausführungsformen beschrieben wurde, erfassen, ob die Handfläche des Kommissionierers nach oben, unten, links oder rechts gedreht wird. Daraus lassen sich Rückschlüsse auf das Fach ziehen, auf welches der Kommissionierer zugreift. Die Zuverlässigkeit und Selektivität der Transponderlesung wird dadurch zusätzlich erhöht.

Das Verfahren kann in einer Weiterbildung ferner ein selektives Aktivieren einer Antenne der RFID-Leseeinheit, insbesondere ein selektives Aktivieren der Antenne aus einer Mehrzahl von Antennen der RFID-Leseeinheit, in Abhängigkeit von der räumlichen Orientierung der RFID-Leseeinheit umfassen. Dadurch kann aus der Mehrzahl von Antennen des RFID-Lesegeräts diejenige Antenne mit dem Richtdiagramm in Richtung des richtigen Transponders aktiviert werden, um Fehllesungen zu unterdrücken. Sind beispielsweise die Transponder in allen Fächern an der Fachoberseite angebracht und wird aus der Analyse der Greifbewegung bestimmt, dass die Handfläche des Kommissionierers beim Greifen in das Fach nach oben gerichtet ist, so wird nur diejenige Antenne der RFID-Leseeinheit aktiviert, welche bei dieser Handstellung nach oben gerichtet ist. Dadurch werden Fehllesungen, welche durch die RFID-Transpondereinheiten der darunterliegenden oder der seitlich benachbarten Lagerfächer hervorgerufen werden könnten, wirksam vermieden.

In einem bevorzugten Beispiel wird die RFID-Leseeinheit zum Aussenden des elektromagnetischen Signals und/oder zum Erfassen der elektromagnetischen Antwortsignale in Abhängigkeit von dem Identifizieren des Bewegungsmusters bzw. der Greifbewegung aktiviert, vorzugsweise ausschließlich dann aktiviert, wenn ein vorbestimmtes Bewegungsmuster bzw. eine vorbestimmte Greifbewegung, welche einem Zugriff auf das Fach entspricht, identifiziert wird.

In einer bevorzugten Ausführungsform umfasst das Verfahren das Bestimmen einer Höhenposition der RFID-Leseeinheit. Das Bestimmen der Höhenposition kann vorzugsweise ein Erfassen eines Luftdrucks umfassen.

In einer bevorzugten Ausführungsform umfasst das Verfahren das Bestimmen einer Raumorientierung der RFID-Leseeinheit. Das Bestimmen der Raumorientierung kann vorzugsweise ein Erfassen eines magnetischen Feldes, insbesondere des Erdmagnetfelds, umfassen.

In einer bevorzugten Ausführungsform ist das Bewegungsmuster bzw. die Greifbewegung, deren Identifikation das Aussenden des elektromagnetischen Signals und/oder das Erfassen des Antwortsignals auslöst, individuell an die Person angepasst. Beispielsweise kann ein lernendes System verwendet werden, welches ein Bewegungsmuster bzw. eine Greifbewegung des Kommissionierers speichert, im Betrieb die Bewegungen des Kommissionierers überwacht und mit dem gespeicherten Bewegungsmuster vergleicht und die RFID-Einheit nur dann aktiviert, wenn eine hinreichende Übereinstimmung festgestellt wird. Die Zuverlässigkeit und Genauigkeit des erfindungsgemäßen Verfahrens lassen sich dadurch zusätzlich steigern.

In einer Weiterbildung der Erfindung umfasst das Verfahren auch das Steuern von mit RFID-Transpondern ausgestatteten Peripheriegeräten des Lagersystems oder Komponenten des Lagersystems mittel der RFID-Leseeinheit.

Das Steuern kann das Lesen einer Kennung eines RFID-Transponders mittels der RFID-Leseeinheit und das Auswählen einer von dem Peripheriegerät bzw. der Komponente auszuführenden Aktion umfassen.

Die Kennung und die ausgewählte Aktion können über eine drahtlose Verbindung an ein zentrales Steuersystem übermittelt werden, welches das Peripheriegerät bzw. die Komponente veranlasst, die ausgewählte Aktion auszuführen. Ein Peripheriegerät kann beispielsweise ein Drucker sein, und die ausgewählte Aktion kann ein Druckauftrag, beispielsweise das Drucken einer Kommissionierliste, sein.

Die Erfindung bezieht sich auch auf eine Vorrichtung zum Identifizieren eines Zugriffs auf Fächer eines Lagersystems, denen jeweils RFID-Transpondereinheiten zugeordnet sind, mit einer Bewegungsdetektoreinheit, welche dazu eingerichtet ist, ein Bewegungsmuster einer Person beim Zugriff auf ein Fach des Lagersystems zu identifizieren, sowie mit einer RFID-Leseeinheit, welche mit der Bewegungsdetektoreinheit gekoppelt ist und dazu eingerichtet ist, ein elektromagnetisches Signal auszusenden und ein elektromagnetisches Antwortsignal, welches von zumindest einer der RFID-Transpondereinheiten in Reaktion auf das ausgesandte Signal erzeugt wird, zu erfassen und daraus bei dem Zugriff auf das Fach des Lagersystems die dem Fach zugeordnete RFID-Transpondereinheit zu identifizieren, wobei die Vorrichtung dazu eingerichtet ist, die RFID-Transpondereinheit in Abhängigkeit von dem Identifizieren des Bewegungsmusters zu identifizieren, und das Bewegungsmuster eine Greifbewegung der Person umfasst.

Die Bewegungsdetektoreinheit kann jede Einheit sein, welche dazu eingerichtet ist, Rückschlüsse auf die Bewegung der Person relativ zu einer Transpondereinheit zu treffen.

In einer Weiterbildung ist die Vorrichtung dazu eingerichtet, eine Greifbewegung der Person zu speichern. Die Vorrichtung kann weiter dazu eingerichtet sein, die gespeicherte Greifbewegung mit der Greifbewegung beim Zugriff auf das Fach zu vergleichen. Auf diese Weise lässt sich mit größerer Zuverlässigkeit bestimmen, ob und wann der Kommissionierer auf das Fach des Lagersystems zugreift.

In einer bevorzugten Ausführungsform kann die Bewegungsdetektoreinheit dazu eingerichtet sein, die Bewegung der Person, welche die RFID-Leseeinheit trägt, aus einem zeitlichen Phasenverlauf der Antwortsignale zu erfassen, insbesondere aus einer zeitlichen Variation des Phasenverlaufs.

Die Bewegungsdetektoreinheit muss daher nicht notwendigerweise auf die RFID-Phasenlage zurückgreifen und kann jede Art von Bewegungssensor umfassen.

Die Vorrichtung kann in einer bevorzugten Ausführungsform dazu eingerichtet sein, das elektromagnetische Signal in Abhängigkeit von dem Identifizieren des Bewegungsmusters auszusenden und/oder das elektromagnetische Antwortsignal in Abhängigkeit von dem Identifizieren des Bewegungsmusters zu erfassen.

Insbesondere kann die Vorrichtung dazu eingerichtet sein, das elektromagnetische Signal ausschließlich in Reaktion auf das Identifizieren des Bewegungsmusters auszusenden und/oder das elektromagnetische Antwortsignal ausschließlich in Reaktion auf das Identifizieren des Bewegungsmusters zu erfassen.

Die Bewegungsdetektoreinheit kann insbesondere in die RFID-Leseeinheit integriert sein.

In einer bevorzugten Ausführungsform ist die Bewegungsdetektoreinheit dazu eingerichtet, an der Person, insbesondere an einer Hand, einem Arm, einem Unterarm, einem Bein, einem Kleidungsstück oder einem Gürtel der Person, befestigt zu werden.

Die Bewegungsdetektoreinheit ist in einer bevorzugten Ausführungsform dazu eingerichtet, an einer Hand oder einem Arm, insbesondere einem Unterarm, der Person befestigt zu werden und eine Greifbewegung der Person bei dem Zugriff auf das Fach zu identifizieren.

Vorzugsweise ist die Bewegungsdetektoreinheit zum Erfassen von Muskelimpulsen und/oder Sehnenimpulsen eingerichtet. Eine solche Bewegungsdetektoreinheit kann insbesondere einen Elektromyographen oder einen Elektroneurographen umfassen.

Alternativ oder zusätzlich kann die Bewegungsdetektoreinheit zum Erfassen einer Linearbeschleunigung und/oder einer Rotationsbeschleunigung eingerichtet sein. Eine solche Bewegungsdetektoreinheit kann einen Beschleunigungssensor umfassen.

In einer bevorzugten Ausführungsform ist die Bewegungsdetektoreinheit zum Erfassen einer Fingerkrümmung eingerichtet, vorzugsweise zur Detektion von Streulicht und/oder zur Detektion von Magnetfeldern und/oder zur Detektion von Beschleunigung eingerichtet.

In einer Weiterbildung umfasst die Vorrichtung eine Einheit zum Bestimmen einer Höhenposition der RFID-Leseeinheit, welche mit der RFID-Leseeinheit gekoppelt ist. Die Einheit zum Bestimmen der Höhenposition kann vorzugsweise einen Luftdrucksensor umfassen.

In einer bevorzugten Ausführungsform umfasst die Vorrichtung eine Einheit zum Bestimmen einer Raumorientierung der RFID-Leseeinheit, welche mit der RFID-Leseeinheit gekoppelt ist. Die Einheit zum Bestimmen der Raumorientierung kann vorzugsweise einen Sensor zum Erfassen eines magnetischen Feldes, insbesondere des Erdmagnetfelds, umfassen.

### Detaillierte Beschreibung bevorzugter Ausführungsformen

Die Merkmale und zahlreichen Vorteile der Erfindung lassen sich am besten anhand einer detaillierten Beschreibung bevorzugter Ausführungsformen unter Bezugnahme auf die anliegenden Zeichnungen verstehen, in denen:
- Fig. 1: schematisch die Anordnung zweier benachbarter Regalfächer mit zugehörigen Transpondern und einen Zugriff auf das erste Regalfach veranschaulicht;
- Fig. 2: die Veränderung der Phasenlage der von dem ersten und zweiten Transponder bei dem Zugriff nach Fig. 1 registrierten Antwortsignale zeigt; und
- Fig. 3: den gemessenen zeitlichen Phasenverlauf bei Vorbeibewegung der Leseeinheit an fünf aufeinanderfolgenden Transpondereinheiten zeigt.

Die Erfindung wird nachfolgend am Beispiel eines Lagerregals mit einer Vielzahl von Fächern, die manuell mit verschiedenen Artikeln bestückt werden können, beschrieben. Ein Lager im Sinne der Erfindung kann jedoch jede Einrichtung bezeichnen, in welcher Artikel in einer vorbestimmten Ordnung zeitweilig oder dauerhaft in verschiedenen Fächern vorgehalten werden. Die Fächer können vorbestimmte Positionen oder Orte innerhalb des Lagersystems bezeichnen und insbesondere jede Art von Behältnis sein, welches zur Aufnahme von Artikeln geeignet ist. Bei den Artikeln kann es sich beispielsweise um Bauteile oder Werkstücke für einen Produktionsprozess oder um beliebige andere Gegenstände handeln, die in den Fächern vorgehalten werden können.

Der Aufbau und die Anordnung eines solchen Lagers sowie die grundlegende Konfiguration eines RFID-Systems zur Erfassung des Zugriffs auf die Fächer ist dem Fachmann aus der DE 10 2004 041 491 A1 bekannt, auf die deshalb ergänzend zur nachfolgenden Beschreibung verwiesen wird.

Die Fächer des Lagersystems sind mit einem oder mehreren RFID-Transpondern ausgerüstet, welche beispielsweise an der vorderen oberen Innenseite des Lagerfachs angeordnet sein können und jeweils eine auslesbare Identifikationskennung aufweisen, die das entsprechende Lagerfach eindeutig identifiziert.

Ein Kommissionierer, welcher in dem Lagersystem tätig ist, hat die Aufgabe, entsprechend eines Kommissionierauftrags vorgegebene Artikel aus vorbestimmten Fächern des Lagersystems zu entnehmen oder sie dort zu platzieren. Um zu überprüfen, ob der Kommissionierer entsprechend dem Kommissionierauftrag auf die richtigen Fächer zugreift und ihn gegebenenfalls bei einem Fehlzugriff zu informieren, trägt der Kommissionierer an seinem Arm oder Handgelenk eine miniaturisierte RFID-Leseeinheit, welche beim Zugriff auf das Lagerfach die dort angebrachte RFID-Transpondereinheit unbemerkt erfasst. Die RFID-Leseeinheit sendet dazu ein Ausgangssignal aus, beispielsweise im UHF-Frequenzbereich, welches von dem RFID-Transponder des entsprechenden Lagerfachs erfasst wird. Der RFID-Transponder moduliert das eingestrahlte elektromagnetische Feld mit seiner Kennung, welche das entsprechende Lagerfach bezeichnet. Das modulierte Signal wird von der RFID-Leseeinheit erfasst, und aus dem modulierten Signal wird die Transponderkennung ausgelesen. Die RFID-Leseeinheit gleicht die erfasste Transponderkennung mit den Kommissionieraufträgen ab, um etwaige Fehlkommissionierungen zu detektieren. Die RFID-Leseeinheit kann dazu mittels eines zweiten, von RFID verschiedenen Übertragungsstandards drahtlos mit einer Basisstation kommunizieren, welche mit einem System zur Lagerverwaltung und Lagersteuerung verbunden ist. Der Abgleich der Fächerkennung mit den Kommissionieraufträgen kann daher sowohl in dem Handgerät als auch in der Basisstation erfolgen. Bei dem zweiten Übertragungsstandard kann es sich beispielsweise um einen WLAN-Standard handeln.

Der Abgleich der identifizierten Transponderkennung mit den Kommissionieraufträgen ermöglicht es, etwaige Fehlkommissionierungen zu detektieren. Der Kommissionierer erhält beim Griff in das falsche Lagerfach eine optische, akustische oder haptische Rückmeldung über das RFID-Lesegerät an seiner Hand oder seinem Arm, so dass der Fehler vermieden oder korrigiert werden kann. Alternativ oder ergänzend kann auch beim Griff in das korrekte Lagerfach eine optische, akustische oder haptische Rückmeldung gegeben werden.

Der Transponder ist vorzugsweise ein sogenannter passiver Transponder ohne eigene Stromversorgung, welcher sich allein aus den Funksignalen des RFID-Lesegeräts versorgt. Solche Transponder sind kostengünstig herzustellen und können mit minimalem Aufwand auch in bestehenden Lagersystemen nachgerüstet werden. Alternativ können jedoch auch aktive Transponder mit eigener Energiequelle eingesetzt werden.

Grundsätzlich kann im Rahmen der Erfindung jeder RFID-Standard zum Einsatz kommen, wobei der Frequenzbereich und das Modulationsverfahren in Abhängigkeit von der spezifischen Anwendung, beispielsweise der Größe des Lagers und der Form und Größe der Lagerfächer, gewählt werden können.

Eine Schwierigkeit bei der automatischen Erfassung der Entnahme- und Abgabefächer liegt darin, dass oftmals mehrere Transpondereinheiten im Sendebereich der RFID-Leseeinheit gleichzeitig ansprechen. Wenn die RFID-Leseeinheit statt der Transpondereinheit des Faches, auf welches der Kommissionierer tatsächlich zugreift, die Transpondereinheit eines benachbarten Faches identifiziert, kann es dabei zu fehlerhaften Lesungen bzw. einer fehlerhaften Rückmeldung an den Kommissionierer kommen. Solche Fehler sind zeitaufwändig, weil der Arbeitsfluss des Kommissionierers unterbrochen wird. Häufige unberechtigte Fehlermeldungen setzen zudem die Akzeptanz des Überprüfungssystems herab und können dazu führen, dass der Kommissionierer die Fehlermeldungen des Systems grundsätzlich ignoriert.

Die Erfinder haben erkannt, dass sich die Zuverlässigkeit der Kennung des Lagerfachs durch Analyse des zeitlichen Verlaufs der Phasenlage der Antwortsignale der RFID-Transpondereinheiten deutlich erhöhen lässt. Der Vergleich der Phasenlage des empfangenen Antwortsignals mit dem Sendesignal ergibt die Phasenlage des Transponders. Aus der Phasenlage lässt sich auf die Entfernung des Transponders rückschließen, eindeutig jedoch nur im Entfernungsbereich bis maximal zur halben Wellenlänge. Wird beispielsweise ein UHF-Sendesignal mit der Frequenz 868 MHz verwendet, lässt sich die Phase eindeutig nur im Bereich bis ca. 17 cm Entfernung bestimmen. Durch die Periodizität der Phase verliert die Entfernungsmessung bei größeren Entfernungen die Eindeutigkeit.

Jedoch ermöglicht eine Analyse des zeitlichen Verlaufs der Phasenlage der Transponder auch im mehrdeutigen Bereich Rückschlüsse auf die Relativbewegung der RFID-Leseeinheit relativ zu den Transpondereinheiten. Zwar ähnelt der Phasenverlauf benachbarter Transponder dem Phasenverlauf desjenigen Transponders, auf dessen Fach tatsächlich zugegriffen wird, in der Form. Jedoch unterscheiden sich die Phasenverläufe in der Variation und ermöglichen auf diese Weise eine Identifikation der richtigen Transpondereinheit.

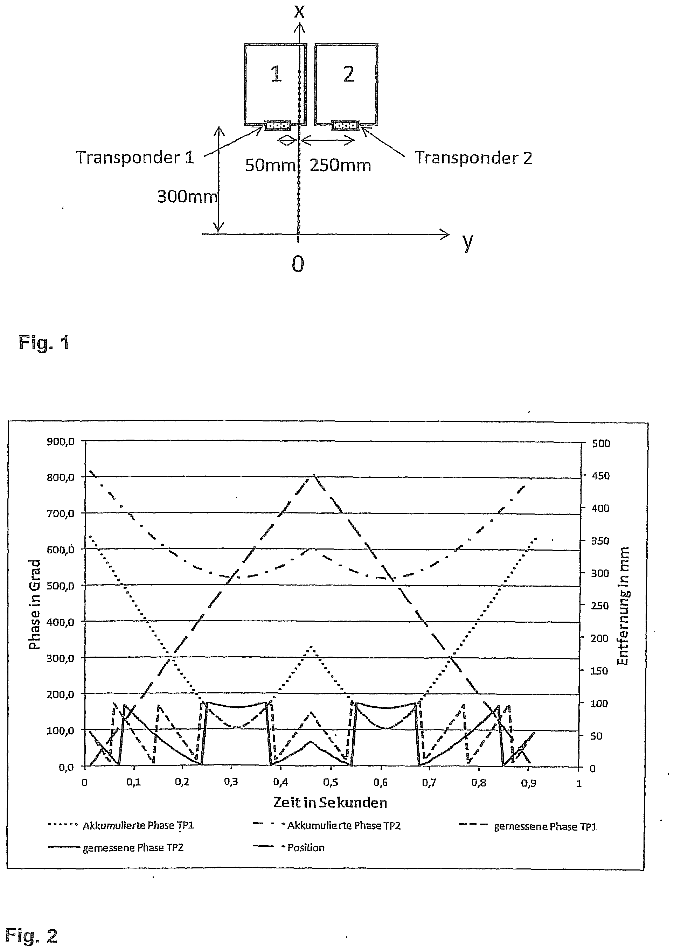

Fig. 1 veranschaulicht schematisch ein Lager mit zwei benachbarten Sichtlagerkästen 1 und 2 in den Abmessungen 150 mm x 200 mm, ausgestattet mit je einem zugehörigen Transponder TP1 bzw. TP2 an der Eingriffsöffnung des jeweiligen Kastens. Ein Kommissionierer, welcher einen Artikel aus dem Fach 1 entnehmen möchte, positioniert sich an der Position 0, ca. 300 mm von der Frontseite des Sichtlagerkastens entfernt, und greift entlang der gepunkteten Linie mit seinem Arm, an dessen Handgelenk er ein RFID-Lesegerät trägt, in den ersten Kasten, entnimmt den Artikel und zieht die Hand aus dem Sichtlagerkasten zurück.

In dem Diagramm der Fig. 2 ist für diesen exemplarischen Crreifvorgang die Position der RFID-Leseeinheit beim Greifen in den Behälter als Abstand von der Nullposition in Abhängigkeit von der Zeit als gestrichelte Linie dargestellt. Fig. 2 zeigt zudem den entsprechenden Verlauf der Phase des Antwortsignals sowohl für den ersten Transponder, auf dessen Fach tatsächlich zugegriffen wird, als auch für den benachbarten zweiten Transponder. Das Diagramm zeigt für beide Transponder TP1 und TP2 sowohl die gemessenen Phasensignale, wie sie die RFID-Leseeinheit liefert, als auch den aus den Messsignalen abgeleiteten akkumulierten Phasenverlauf. Wie aus dem Diagramm zu ersehen ist, ähnelt die akkumulierte Phase für den zweiten Transponder TP2 der akkumulierten Phase für den ersten Transponder TP1 in ihrer Form. Die akkumulierte Phase nimmt bei einer Transponderposition an der Front des Behälters beim Griff zum Behälter (Bewegung zum Transponder hin) jeweils zuerst ab, dann wieder zu (Griff in den Behälter), dann wieder ab (Bewegung aus dem Behälter heraus, zum Transponder hin) und dann wieder zu (Bewegung vom Behälter weg). Beide akkumulierten Phasenverläufe erreichen ein lokales Maximum am Umkehrpunkt zwischen dem Greifen in den Behälter und dem Zurückziehen der Hand. Jedoch variiert die akkumulierte Phase des ersten Transponders TP1 dabei stärker als die akkumulierte Phase des Transponders TP2.

Die Differenz des akkumulierten Phasenwerts zwischen dem lokalen Extremum, welches dem Umkehrpunkt entspricht, und den benachbarten Extrema steigt mit abnehmender Entfernung zum Transponder. Sie ist für den ersten Transponder TP1, auf dessen Fach zugegriffen wird und an dem die RFID-Leseeinheit in einem Abstand von nur ca. 50 mm vorbeibewegt wird, daher größer als für den benachbarten zweiten Transponder TP2, an dem die Hand des Kommissionierers mit der RFID-Leseeinheit in einem größeren Abstand von 250 mm vorbeibewegt wird. Der größte Wert der Phasendifferenz entspricht auch in Szenarien, in denen Transpondersignale von mehr als zwei Transpondern detektiert werden, stets dem nächsten Transponder. Auf diese Weise lässt sich aus der Phasendifferenz zwischen dem Umkehrpunkt und den benachbarten Extrema auf das Fach schließen, auf welches zugegriffen wird.

Alternativ oder zusätzlich kann die Krümmung des Phasenverlaufs im Bereich des Extremums, welches dem Umkehrpunkt der RFID-Einheit entspricht, zur Bestimmung herangezogen werden. Wie Fig. 2 zeigt, ist die Krümmung im Bereich des Extremums für den ersten Transponder TP1 größer als für den zweiten Transponder TP2. Allgemein steigt der Wert der Krümmung am Extremum mit abnehmendem Abstand zwischen der RFID-Leseeinheit und dem RFID-Transponder. Durch Analyse der Krümmung im Bereich des Extremums lässt sich daher unter mehreren Antwortsignalen dasjenige Signal identifizieren, welches dem Fach entspricht, auf das der Kommissionierer tatsächlich zugreift.

Zusätzlich kann das RFID-Lesegerät dazu eingerichtet sein, die Empfangsleistung oder Feldstärke des Antwortsignals zu erfassen. Auch daraus lassen sich Rückschlüsse auf die Entfernung der RFID-Transpondereinheit von der RFID-Leseeinheit ziehen. Die richtige Transpondereinheit, welche dem Fach entspricht, auf das tatsächlich zugegriffen wird, kann dann als Transpondereinheit mit dem stärksten Antwortsignal bestimmt werden.

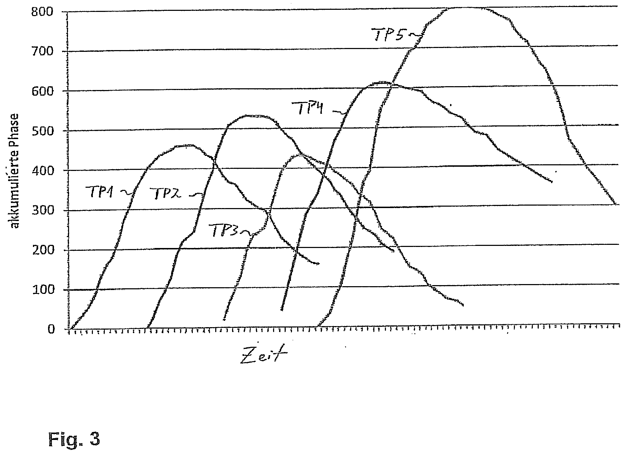

Fig. 3 zeigt zum Vergleich den gemessenen Phasenverlauf des Antwortsignals von fünf Transpondereinheiten TP1, TP2, TP3, TP4 und TP5, an welchen die RFID-Leseeinheit nacheinander lediglich vorbeibewegt wird. Das Vorzeichen der Phase ist durch die Leseeinheit invertiert und bereits auf einen Messungsbeginn bei t = 0 umgerechnet. Die Phase nimmt bei Annäherung der Leseeinheit an den Transponder zunächst zu, durchläuft ein Maximum, welches dem Ort des geringsten Abstandes zwischen der Leseeinheit und dem jeweiligen Transponder entspricht, und nimmt mit zunehmender Entfernung der Leseeinheit vom Transponder wieder ab. Während der Absolutwert der akkumulierten Phase von Transponder zu Transponder variiert, ist der Kurvenverlauf für alle fünf Transpondereinheiten sehr ähnlich. Insbesondere ist der Kurvenverlauf in seiner Form unterscheidbar von dem Phasenverlauf beim Zugriff auf ein Fach des Lagersystems, wie er in Fig. 2 veranschaulicht ist. Eine Analyse des Phasenverlaufs des Antwortsignals ermöglicht es daher, mit großer Zuverlässigkeit einen Zugriff des Kommissionierers auf ein Fach des Lagersystems zu identifizieren und zu unterscheiden von einer bloßen Vorbeibewegung an den Fächern ohne Zugriff. Diese beiden Szenarien lassen sich aus dem Phasenverlauf auch ohne detaillierte Analyse unterscheiden. In einem ersten Schritt kann daher aus dem Phasenverlauf zunächst bestimmt werden, ob der Kommissionierer überhaupt auf ein Fach des Lagers zugreift oder sich lediglich durch das Lager an den Fächern vorbeibewegt. In einem zweiten Schritt kann dann durch genauere Analyse des zeitlichen Verlaufs der gemessenen und der akkumulierten Phase, wie sie vorangehend mit Bezug auf Fig. 2 beschrieben wurden, bestimmt werden, auf welches der Fächer zugegriffen wurde.

Zur Unterstützung der Erfassung eines Zugriffs auf Fächer des Lagersystems kann die RFID-Leseeinheit mit zusätzlichen Sensoren ausgebildet sein, um die Bewegung des Kommissionierers zu erfassen und beispielsweise einen Greifvorgang zu erkennen. Der Bewegungssensor ist dabei vorteilhafterweise in die RFID-Leseeinheit integriert und wird direkt an der Hand bzw. dem Unterarm des Kommissionierers getragen.

Vorzugsweise sollte es die Greiferkennung ermöglichen, zwischen folgenden Stati zu unterscheiden: (1) keine Aktion; (2) Gehen ohne Greifen; (3) Beginn Vorgang Greifen in Behälter/Lagerfach; (4) Greifen in Behälter, Greifen des Artikels; (5) Zurückziehen der Hand aus Behälter/Lagerfach; (6) Beginn Vorgang Ablegen des Artikels; (7) Handbewegung zum Ablageort, Ablegen des Artikels; und (8) Zurückziehen der Hand. Dies lässt sich beispielsweise durch Messung einer linearen oder rotatorischen Beschleunigung an der Hand bzw. am Arm des Kommissionierers, durch Messung einer Anspannung der Handmuskeln oder durch Messung einer Fingerkrümmung erreichen.

Die Beschleunigungssensorik liefert ein relativ komplexes Ausgangssignal, welches mit unterschiedlich aufwändigen Algorithmen verarbeitet werden kann. Im einfachsten Fall genügt es, lediglich die auftretenden Beschleunigungsspitzen zu detektieren, aus deren Häufigkeit und Stärke dann die einzelnen Stati der Bewegung abgeleitet werden. Dazu können beispielsweise piezoelektrische, piezoresistive und/oder kapazitive Beschleunigungssensoren verwendet werden, wie sie in anderen technischen Bereichen routinemäßig eingesetzt werden. Der Beschleunigungssensor kann vorzugsweise in die RFID-Leseeinheit integriert sein, so dass unmittelbare Rückschlüsse auf die auf die Hand oder den Arm des Kommissionierers wirkenden Beschleunigungskräfte gezogen werden können. Eine Detektion der Linearbeschleunigung ermöglicht neben einem Erkennen der Beschleunigungsspitzen beim Griff in das Fach auch die Erkennung der Handhaltung durch eine Bestimmung des Normalkraftvektors. Die Erfassung einer rotatorischen Beschleunigung ermöglicht das Erkennen einer Drehung des Kommissionierers aus der Gehhaltung nach der Greifhaltung. In Kombination ermöglichen die Messdaten die Aufnahme einer Wegtrajektorie durch die Initialsensorik sowie eine Ermittlung der Annäherung an die Zielposition und ein Erkennen eines bevorstehenden Greifvorgangs.

Muskelspannungssensoren ermöglichen ein Vermessen der angespannten Fingermuskeln beim Greifvorgang. Dazu können insbesondere Nerven- und/oder Sehnenimpulse detektiert werden, beispielsweise unter Verwendung eines Elektromyographen oder Elektroneurographen. Solche Sensoren messen mittels auf der Haut anliegenden Elektroden die elektrische Aktivität in den darunterliegenden Muskeln, aus der sich auf den Bewegungszustand rückschließen lässt. Die Muskelaktivität der Finger lässt sich beispielsweise mittels eines Sensorbandes am körperseitigen Ende des Unterarms erfassen. T. Scott Saponas et al. beschreiben in ihrem Artikel "Demonstrating the Feasibility of Using Forearm Electromyography for Muscle-Computer Interfaces", Proceedings of the CHI 2008, Anwendungen solcher Detektoren zur Eingabesteuerung für Computer. Die gewonnenen Erkenntnisse lassen sich auf ein Vermessen des Greifvorgangs durch Detektion der angespannten Fingermuskeln im Rahmen der vorliegenden Erfindung übertragen und ermöglichen ein zuverlässiges Bestimmen des Greifvorgangs.

Unterstützend kann zur Detektion des Greifvorgangs auch eine Messung der Fingerkrümmung erfolgen, beispielsweise durch faseroptische Bestimmung der Fingerkrümmung mittels Streulichtdetektion an einer gebogenen Glasfaser, durch an den Fingern positionierte Beschleunigungssensoren oder durch Biegesensoren am Fingerrücken, welche eine Variation eines magnetischen Feldes oder eines elektrischen Widerstands beim Biegen eines am Fingerrücken positionierten Sensorelements erfassen.

Neben einer Unterstützung der Greiferkennung können die Bewegungssensoren auch die selektive Transponderlesung unterstützen. Beispielsweise kann über die Linearbeschleunigungssensorik erkannt werden, welche Handhaltung der Kommissionierer beim Griff in das Fach des Lagers einnimmt, d.h., ob seine Handfläche nach oben, unten, links oder rechts gerichtet ist. Unter Berücksichtigung der Handhaltung kann nun selektiv diejenige der Antennen der RFID-Leseeinheit aktiviert werden, welche in Richtung des richtigen Transponders zeigt. Greift der Kommissionierer mit der Handfläche nach unten in das Fach hinein und befinden sich die dem Fach zugeordneten Transponder jeweils an der Oberseite des Fachs, kann beispielsweise nur die Antenne an der Oberseite der Hand aktiviert werden, um Fehllesungen durch die Transponder darunterliegender und seitlich benachbarter Lagerfächer zu unterdrücken.

Ein Identifizieren des Greifvorgangs unter Verwendung von Bewegungssensoren ermöglicht darüber hinaus auch einen besonders energiesparenden Betrieb des RFID-Systems, bei welchem die Leseeinheit nur dann aktiviert wird, wenn tatsächlich ein Greifvorgang erfolgt. Dies ist insbesondere bei batteriebetriebenen RFID-Einheiten von besonderem Vorteil, da auf diese Weise die Einsatzdauer zwischen zwei Ladevorgängen erhöht wird.

Zur weiteren Unterstützung der selektiven Transponderlesung kann die Ausgangsleistung (und damit die Lesereichweite) der RFID-Leseeinheit dynamisch angepasst werden. Beispielsweise kann aufgrund der Kommissionieraufträge bestimmt werden, wie groß die Lagerfächer sind, auf welche zugegriffen werden wird, und wie weit der Transponder von der Hand des Kommissionierers entfernt sein wird. Bei größeren Fächern kann die Leistung entsprechend erhöht werden, bei kleineren Fächern entsprechend verringert werden.

Die RFID-Leseeinheit kann darüber hinaus auch einen Drucksensor umfassen, welcher durch Messung des Luftdrucks eine Höhenposition bestimmt. Der Drucksensor ist vorzugsweise in die an der Hand oder dem Unterarm des Kommissionierers positionierte RFID-Leseeinheit integriert und ermöglicht so die Bestimmung der Greifhöhe. Daraus lassen sich Rückschlüsse ziehen, auf welche der Regalebenen des Lagers der Kommissionierer zugreift, um auf diese Weise das Fach, auf welches der Kommissionierer zugreift, von den darunterliegenden oder den darüberliegenden Fächern zu unterscheiden.

Vorzugsweise umfasst die RFID-Leseeinheit darüber hinaus einen Magnetfeldsensor, welcher das Erdmagnetfeld detektiert und auf diese Weise Rückschlüsse auf die Ausrichtung der RFID-Leseeinheit im Raum zulässt. Diese Daten können sowohl zur Unterstützung der selektiven Transponderlesung als auch zur globalen Langzeitkalibrierung der RFID-Leseeinheit verwendet werden. Vorzugsweise umfasst der Magnetfeldsensor einen Hallsensor und ist in die RFID-Leseeinheit integriert.

In einem Kommissioniersystem arbeiten üblicherweise mehrere Kommissionierer, welche sich in ihrem Bewegungsmuster bzw. Greifstil unterscheiden. Zudem kann aufgrund der körpernahen Montage der RFID-Leseeinheit das Richtdiagramm der RFID-Antennen vom Körperbau der Kommissionierer abhängen. Die individuellen nutzerspezifischen Unterschiede können sowohl die Greiferkennung als auch die selektive Transponderlesung erschweren. Zur Vermeidung solcher Schwierigkeiten kann ein lernendes System eingesetzt werden, welches auf jeden Kommissionierer individuell angepasst ist. Beispielsweise kann der Kommissionierer anhand eines "Lernregals" oder eines "Lernauftrags" vordefinierte Vorgänge abarbeiten. Die dabei erfassten Sensordaten werden aufgezeichnet und als Bewegungsprofil bzw. Greifprofil des Benutzers gespeichert. Im späteren Betrieb ermöglicht ein Vergleich der detektierten Bewegung mit dem gespeicherten Profil dann eine zuverlässige Identifikation der Greifvorgänge. Das gespeicherte Profil kann im laufenden Betrieb auch kontinuierlich adaptiert werden, um beispielsweise einer fortschreitenden Ermüdung des Kommissionierers Rechnung zu tragen.

Die RFID-Leseeinheit kann in einer Weiterbildung der Erfindung auch als Eingabevorrichtung für Peripheriegeräte des Lagersystems, beispielsweise für Drucker oder für eine Zeiterfassungsvorrichtung, verwendet werden. Dabei können weitere RFID-Transponder als Eingabemedien verwendet werden, um so auf Bedienelemente am zu tragenden Gerät weitestgehend verzichten zu können.

Beispielsweise kann ein RFID-Transponder mit einer bestimmten Identifikationskennung beschrieben werden, welche im Lagersystem mit einem vordefinierten Ereignis verknüpft wird, beispielsweise mit dem Abrufen eines neuen Auftrags, der Unterbrechung eines Auftrags oder einem Druckauftrag. Durch Erfassen eines Transponders an einem Drucker mittels der RFID-Leseeinheit kann beispielsweise ein Druckauftrag über den zweiten Übertragungsstandard und die Basisstation an den entsprechenden Drucker geleitet werden, so dass am Drucker ohne weitere Aktion ein Kommissionierauftrag abgerufen und bereitgestellt werden kann.

## Patentansprüche

1. Verfahren zum Identifizieren eines Zugriffs auf Fächer eines Lagersystems, denen jeweils RFID-Transpondereinheiten (1,2) zugeordnet sind, mit folgenden Schritten:
Identifizieren eines Bewegungsmusters einer Person, um den Zugriff auf ein Fach des Lagersystems zu erfassen;
Aussenden eines elektromagnetischen Signals mittels einer RFID-Leseeinheit; und
Erfassen eines elektromagnetischen Antwortsignals, welches von zumindest einer der RFID-Transpondereinheiten (1,2) in Reaktion auf das ausgesandte Signal erzeugt wird, mittels der RFID-Leseeinheit, um daraus bei dem Zugriff auf das Fach die dem Fach zugeordnete RFID-Transpondereinheit zu identifizieren;
wobei der Schritt des Identifizierens der RFID-Transpondereinheit in Abhängigkeit von dem Identifizieren des Bewegungsmusters der Person erfolgt;
wobei das Bewegungsmuster eine Greifbewegung der Person umfasst.

2. Verfahren nach Anspruch 1, bei welchem das Identifizieren der Greifbewegung das Erfassen von Muskelimpulsen und/oder Sehnenimpulsen umfasst.

3. Verfahren nach einem der Ansprüche 1 oder 2, bei welchem das Identifizieren der Greifbewegung das Erfassen einer Linearbeschleunigung und/oder einer Rotationsbeschleunigung umfasst.

4. Verfahren nach einem der Ansprüche 1 bis 3, bei welchem das Identifizieren der Greifbewegung das Erfassen einer Fingerkrümmung umfasst, wobei das Erfassen der Fingerkrümmung vorzugsweise eine Streulichtdetektion und/oder eine Magnetfelddetektion und/oder eine Beschleunigungsdetektion umfasst.

5. Verfahren nach einem der vorangehenden Ansprüche mit dem Schritt des Steuerns von mit RFID-Transpondereinheiten ausgestatteten Peripheriegeräten des Lagersystems mittels der RFID-Leseeinheit.

6. Vorrichtung zum Identifizieren eines Zugriffs auf Fächer eines Lagersystems, denen jeweils RFID-Transpondereinheiten (1,2) zugeordnet sind, wobei die Vorrichtung umfasst:
eine Bewegungsdetektoreinheit, welche dazu eingerichtet ist, ein Bewegungsmuster einer Person bei einem Zugriff auf ein Fach des Lagersystems zu identifizieren; und
eine RFID-Leseeinheit, welche mit der Bewegungsdetektoreinheit gekoppelt ist und dazu eingerichtet ist, ein elektromagnetisches Signal auszusenden und ein elektromagnetisches Antwortsignal, welches von zumindest einer der RFID-Transpondereinheiten (1,2) in Reaktion auf das ausgesandte Signal erzeugt wird, zu erfassen und daraus bei dem Zugriff auf das Fach des Lagersystems die dem Fach zugeordnete RFID-Transpondereinheit zu identifizieren;
wobei die Vorrichtung dazu eingerichtet ist, die RFID-Transpondereinheit in Abhängigkeit von dem identifizierten Bewegungsmuster zu identifizieren;
wobei das Bewegungsmuster eine Greifbewegung der Person umfasst.

7. Vorrichtung nach Anspruch 6, bei welcher die Bewegungsdetektoreinheit zum Erfassen von Muskelimpulsen und/oder Sehnenimpulsen eingerichtet ist.

8. Vorrichtung nach Anspruch 6 oder 7, bei welcher die Bewegungsdetektoreinheit zum Erfassen einer Linearbeschleunigung und/oder einer Rotationsbeschleunigung eingerichtet ist.

9. Vorrichtung nach einem der Ansprüche 6 bis 8, bei welcher die Bewegungsdetektoreinheit zum Erfassen einer Fingerkrümmung eingerichtet ist, vorzugsweise zur Detektion von Streulicht und/oder zur Detektion von Magnetfeldern und/oder zur Detektion einer Beschleunigung eingerichtet ist.

## Claims

1. A method for identifying an access to compartments of a storage system, each of which compartments is assigned RFID transponder units (1, 2), comprising the following steps:
identifying a movement pattern of a person in order to detect the access to a compartment of the storage system;
transmitting an electromagnetic signal by means of an RFID reading unit; and
detecting, by means of the RFID reading unit, an electromagnetic response signal which is generated by at least one of the RFID transponder units (1, 2) in response to the transmitted signal in order to identify therefrom during the access to the compartment the RFID transponder unit assigned to the compartment;
wherein the step of identifying the RFID transponder unit is carried out in dependence on the identification of the movement pattern of the person;
wherein the movement pattern comprises a gripping movement of the person.

2. The method according to claim 1, in which identifying the gripping movement comprises detecting muscle impulses and/or tendon impulses.

3. The method according to any one of claims 1 or 2, in which identifying the gripping movement comprises detecting a linear acceleration and/or a rotational acceleration.

4. The method according to any one of claims 1 to 3, in which identifying the gripping movement comprises detecting a bending of a finger, wherein detecting the bending of the finger preferably comprises detecting scattered light and/or detecting a magnetic field and/or detecting an acceleration.

5. The method according to any one of the preceding claims, comprising the step of controlling peripheral devices of the storage system equipped with RFID transponder units by means of the RFID reading unit.

6. A device for identifying an access to compartments of a storage system, each of which compartments is assigned RFID transponder units (1, 2), the device comprising:
a motion detector unit which is configured for identifying a movement pattern of a person during the access to a compartment of the storage system; and
an RFID reading unit which is coupled to the motion detector unit and is configured to transmit an electromagnetic signal and to detect an electromagnetic response signal which is generated by at least one of the RFID transponder units (1, 2) in response to the transmitted signal and to identify therefrom during the access to the compartment of the storage system the transponder unit assigned to the compartment;
wherein the device is configured to identify the RFID transponder unit in dependence on the identified movement pattern;
wherein the movement pattern comprises a gripping movement of the person.

7. The device according to claim 6, in which the motion detector unit is configured for detecting muscle impulses and/or tendon impulses.

8. The device according to claim 6 or 7, in which the motion detector unit is configured for detecting a linear acceleration and/or rotational acceleration.

9. The device according to any one of claims 6 to 8, in which the motion detector unit is configured for detecting a bending of a finger, preferably configured for detecting scattered light and/or for detecting magnetic fields and/or for detecting acceleration.

## Revendications

1. Procédé d'identification d'un accès à des casiers d'un système d'entreposage auxquels sont affectées respectivement des unités de transpondeur RFID (1, 2), avec les étapes suivantes :
identification d'un modèle de mouvement d'une personne pour détecter l'accès à un casier du système d'entreposage ;
émission d'un signal électromagnétique au moyen d'une unité de lecture RFID ; et
détection d'un signal de réponse électromagnétique qui est produit par au moins une des unités de transpondeur RFID (1, 2) en réaction au signal émis, au moyen de l'unité de lecture RFID pour, lors de l'accès au casier, identifier à partir de cela l'unité de transpondeur RFID affectée au casier ;
l'étape d'identification de l'unité de transpondeur RFID s'effectuant en fonction de l'identification du modèle de mouvement de la personne ;
le modèle de mouvement comprenant un mouvement de saisie de la personne.

2. Procédé selon la revendication 1, dans lequel l'identification du mouvement de saisie comprend la détection d'impulsions musculaires et/ou d'impulsions de tendons.

3. Procédé selon l'une des revendications 1 ou 2, dans lequel l'identification du mouvement de saisie comprend la détection d'une accélération linéaire et/ou d'une accélération de rotation.

4. Procédé selon l'une des revendications 1 à 3, dans lequel l'identification du mouvement de saisie comprend la détection d'une courbure de doigt, la détection de la courbure de doigt comprenant de préférence une détection de lumière diffuse et/ou une détection de champ magnétique et/ou une détection d'accélération.

5. Procédé selon l'une des revendications précédentes, avec l'étape de commande d'appareils périphériques du système d'entreposage équipés d'unités de transpondeur RFID au moyen de l'unité de lecture RFID.

6. Dispositif d'identification d'un accès à des casiers d'un système d'entreposage auxquels sont affectées respectivement des unités de transpondeur RFID (1, 2), le dispositif comprenant :
une unité de détecteur de mouvement qui est aménagée pour identifier un modèle de mouvement d'une personne lors d'un accès à un casier du système d'entreposage ; et
une unité de lecture RFID qui est couplée à l'unité de détecteur de mouvement et qui est aménagée pour émettre un signal électromagnétique et pour détecter un signal de réponse électromagnétique qui est produit par au moins une des unités de transpondeur RFID (1, 2) en réaction au signal émis et pour, lors de l'accès au casier du système d'entreposage, identifier à partir de cela l'unité de transpondeur RFID affectée au casier ;
le dispositif étant aménagé pour identifier l'unité de transpondeur RFID en fonction du modèle de mouvement identifié ;
le modèle de mouvement comprenant un mouvement de saisie de la personne.

7. Dispositif selon la revendication 6, dans lequel l'unité de détecteur de mouvement est aménagée pour la détection d'impulsions musculaires et/ou d'impulsions de tendons.

8. Dispositif selon la revendication 6 ou 7, dans lequel l'unité de détecteur de mouvement est aménagée pour la détection d'une accélération linéaire et/ou d'une accélération de rotation.

9. Dispositif selon l'une des revendications 6 à 8, dans lequel l'unité de détecteur de mouvement est aménagée pour la détection d'une courbure de doigt, de préférence pour la détection de lumière diffuse et/ou pour la détection de champs magnétiques et/ou pour la détection d'une accélération.
